# EUROPÄISCHE PATENTSCHRIFT

(11) **EP 0 927 345 B1**
(45) Veröffentlichungstag und Bekanntmachung des Hinweises auf die Patenterteilung: **24.09.2003**
(21) Anmeldenummer: 97935537.7
(22) Anmeldetag: 23.07.1997
(51) Int. Cl.: G01M 3/20

(54) **VERFAHREN ZUR UNTERSUCHUNG EINER MEHRZAHL ÄHNLICHER PRÜFLINGE AUF LECKS**
PROCESS FOR INSPECTING A PLURALITY OF SIMILAR TEST BODIES FOR LEAKS
PROCEDE POUR REALISER UN ESSAI D'ETANCHEITE SUR UNE PLURALITE D'EPROUVETTES SEMBLABLES

(30) Priorität: 20.09.1996 DE 19638506
(43) Veröffentlichungstag der Anmeldung: 07.07.1999
(73) Patentinhaber: Leybold Vakuum GmbH, 50968 Köln (DE)
(72) Erfinder: BÖHM, Thomas, D-50859 Köln (DE)
(74) Vertreter: Leineweber, Jürgen, Dipl.-Phys.
(86) Internationale Anmeldenummer: EP9703983
(87) Internationale Veröffentlichungsnummer: WO98012529

(56) Entgegenhaltungen:
- DE-A- 19 504 278
- D.G. MAHONEY: "EXPANDED-RANGE, SEALED PARTS LEAK TESTING TECHNOLOGY FOR HELIUM MASS SPECTROMETER LEAK DETECTION" JOURNAL OF VACUUM SCIENCE AND TECHNOLOGY: PART A., Bd. 12, Nr. 4, Juli 1994 - August 1994, NEW YORK US, Seiten 1740-1743, XP000464712

## Beschreibung

Die Erfindung bezieht sich auf ein Verfahren mit den Merkmalen des Oberbegriffs des Patentanspruchs 1.

Zur Verbesserung der Qualität von Produkten, insbesondere Serienprodukten mit Hohlräumen (Behälter, Gehäuse, Wärmetauscher, Kondensatoren usw.) wird immer häufiger das Helium-Lecksuchverfahren eingesetzt, um defekte Produkte möglichst frühzeitig feststellen und ausscheiden zu können. Aus Zeit- und Kostengründen sollen dabei die Taktzeiten (Untersuchungszeit pro Prüfling) möglichst kurz sein.

Bei einem Vakuumlecksuchverfahren wird leichtes Gas, insbesondere Helium, als Testgas verwendet. Dieses gelangt für den Fall des Vorhandenseins eines Lecks in den evakuierten Prüfling und wird mit Hilfe eines Massenspektrometers registriert. Die Evakuierung des Prüflings erfolgt mit Hilfe einer im Lecksucher untergebrachten Vorvakuumpumpe. Der Evakuierung des Massenspektrometers dient eine Hochvakuumpumpe, da der Betriebsdruck eines Massenspektrometers maximal 10⁻⁴ mbar betragen darf. Bei einem bekannten Verfahren nach dem Oberbegriff des Patentanspruchs 1 wird jeweils ein Prüfling evakuiert und nach Erreichen eines Druckes Pᵤ (Umschaltdruck) vom Evakuierbetrieb auf den Meßbetrieb umgeschaltet. Pᵤ ist der am Zwischeneinlaß der Hochvakuumpumpe herrschende Druck. Er muß ausreichend niedrig gewählt werden, damit der Druck im Massenspektrometer den zulässigen maximalen Betriebsdruck nicht überschreitet.

Aus Sicherheitsgründen wird der Druck Pᵤ sehr klein gewählt, um eine Gefährdung des Betriebs des Massenspektrometers unter allen Umständen zu vermeiden. Diese Sicherheitsmaßnahme führt dazu, daß erst nach relativ langen Evakuierungszeiten vom Evakuierbetrieb auf Meßbetrieb umgeschaltet werden kann. Dieses trifft im besonderen Maße auf die jüngere Generation von Lecksuchern zu, bei denen trockene (ölfreie) Vorvakuumpumpen, zum Beispiel Membranpumpen, Scrollpumpen oder dergleichen eingesetzt werden, welche bei niedrigen Drücken (z.B. > 5 mbar) ein relativ kleines Saugvermögen haben.

Ein Lecksuchgerät mit den Vorrichtungsmerkmalen des Oberbegriffs des Patentanspruchs 1 ist aus der DE-A-195 04 278 bekannt. Zur Verkürzung der Ansprechzeit des Lecksuchgerätes wird vorgeschlagen, zum Übergang von Evakuierbetrieb auf Messbetrieb ein Ventil einzusetzen, dessen Leitwert einstellbar ist. Mit dem Beginn der Öffnungsphase muss deshalb nicht mehr der aus Sicherheitsgründen sehr klein gewählte Umschaltdruck abgewartet werden, sondern nur mit dem Ende der Öffnungsphase.

Der vorliegenden Erfindung liegt die Aufgabe zugrunde, die Evakuierungszeiten für die Prüflinge, welche maßgeblich die Taktzeiten bestimmen, zu verkürzen.

Erfindungsgemäß wird diese Aufgabe durch die kennzeichnenden Maßnahmen der Patentansprüche gelöst. Die Erfindung beruht auf der Erkenntnis, daß bei der Leckuntersuchung einer Mehrzahl ähnlicher Prüflinge der ümschaltdruck Pᵤ höher gewählt werden kann, als es bisher aus Sicherheitsgründen geschah. Eine frühere Umschaltung von Evakuierbetrieb auf Meßbetrieb hat nicht nur den Vorteil eines früheren Beginns der Lecksuche; unmittelbar nach der Umschaltung wird darüberhinaus das große Saugvermögen der dem Zwischeneinlaß folgenden Stufe der Hochvakuumpumpe wirksam, so daß sich auch die Evakuierungszeit selbst erheblich verkürzt. Wegen der Ähnlichkeit der Prüflinge ist die Anwendung eines Lernprozesses möglich,
mit dessen Hilfe ein optimaler Umschaltdruck P_{u opt} ermittelt werden kann.

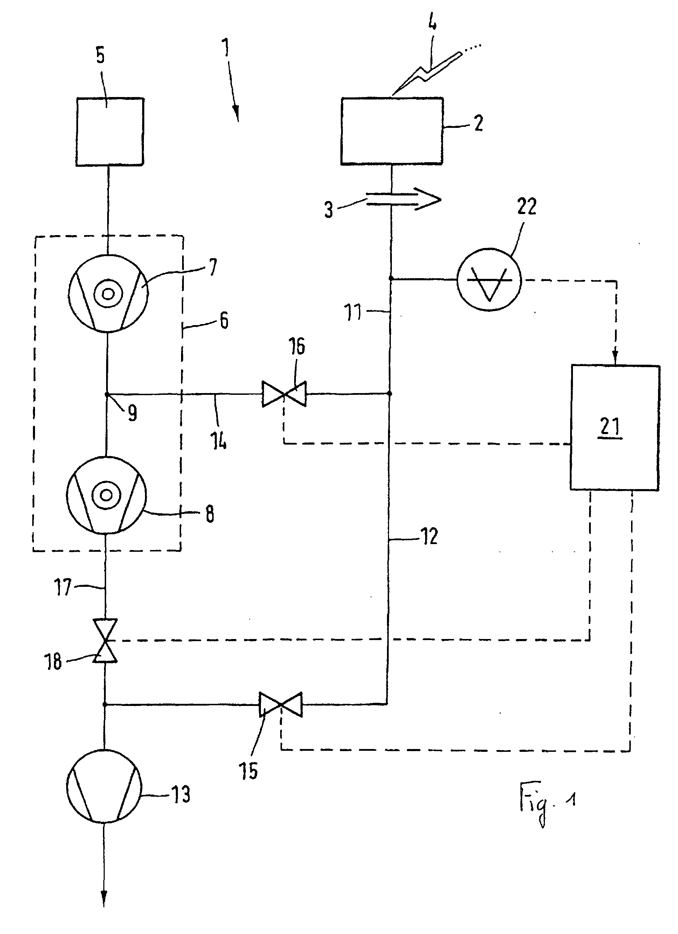

Einzelheiten der Erfindung sollen anhand eines in der Figur schematisch dargestellten Lecksuchers nach der Erfindung erläutert werden.

Der dargestellte Lecksucher 1 ist mit einem Anschluß für einen Prüfling 2 (Testanschluß 3) ausgerüstet. Der Prüfling wird beispielsweise von außen mit Helium besprüht (Sprühpistole 4). Ist er leck, gelangt Helium in den Lecksucher 1 und wird mit Hilfe des Massenspektrometers 5 registriert. Anstelle des Prüflings 2 kann auch eine Kammer, in welcher sich ein oder mehrere Prüflinge befinden, mit dem Testanschluß 3 verbunden werden.

Zur Erzeugung des notwendigen Betriebsdruckes im Massenspektrometer 5 dient eine Hochvakuumpumpe 6 mit zwei Stufen 7 und 8 sowie mit einem Zwischeneinlaß 9. Es können zwei separate Pumpen eingesetzt werden; zweckmäßig ist jedoch der Einsatz einer zweistufigen Reibungspumpe, z.B. Turbomolekularpumpe, die mit dem Zwischeneinlaß 9 ausgerüstet ist.

Die Stufe 7 der Hochvakuumpumpe 6 hat eine relativ kleine Kompression für leichte Gase, so daß über den Zwischeneinlaß 9 eintretendes Helium entgegen der Förderrichtung der Stufe 7 in das Massenspektrometer 5 gelangen kann (Contra-flow-Prinzip).

Der Testanschluß 3 steht über die Leitungsabschnitte 11, 12 mit der Vorvakuumpumpe 13 sowie über die Leitungsabschnitte 11, 14 mit dem Zwischeneinlaß 9 in Verbindung. In den Leitungsabschnitten 12 und 14 befinden sich die Ventile 15 bzw. 16. Auch der Auslaß der Hochvakuumpumpe 6 bzw. der Pumpstufe 8 steht mit der Vorvakuumpumpe 13 in Verbindung, und zwar über den Leitungsabschnitt 17 mit dem Ventil 18. Der Leitungsabschnitt 12 mündet in den Leitungsabschnitt 17 zwischen dem Ventil 18 und der Vorvakuumpumpe 13.

Der Steuerung des Lecksuchprozesses dient eine Steuereinheit 21, der Signale vom Druckmeßgerät 22 zugeführt werden. Dieses mißt den Druck im Bereich des Testanschlusses 3. Nur zu den Ventilen 15, 16 und 18 führende Steuerleitungen sind dargestellt.

Die Untersuchung eines Prüflings 2 auf Lecks erfolgt in der Weise, daß zunächst das Ventil 15 geöffnet wird. Dadurch wird der Prüfling 2 evakuiert. Die Evakuierung dauert so lange bis der vom Meßgerät 22 festgestellte Druck den Umschaltdruck Pᵤ erreicht. Danach wird auf Meßbetrieb umgeschaltet, indem die Ventile 16 und 18 geöffnet werden. Ist der Prüfling 2 leck, gelangt in den Prüfling eingetretenes Helium über den Leitungsabschnitt 14 und die Pumpstufe 7 ins Massenspektrometer und wird dort registriert.

Zur Einstellung eines optimalen Umschaltdruckes Pᵤ opt wird das folgende Lernverfahren angewendet: Bei der Untersuchung eines ersten Prüflings auf Lecks wird - wie beim Stand der Technik - ein relativ niedriger Umschaltdruck Pᵤ gewählt. Dieser Druck liegt erheblich unter einem P_{u max}/ bei dem die Umschaltung auf Meßbetrieb gerade noch stattfinden kann, ohne daß der Druck im Massenspektrometer seine kritische Grenze übersteigt.

Nach jedem Umschalten von Evakuierbetrieb auf Meßbetrieb wird das Absinken des Druckes mit Hilfe des Meßgerätes 22 ermittelt. Bei der Untersuchung eines ersten Prüflings wird dieser Schritt bestätigen, daß Pᵤ weit unter Pᵤ max liegt.

Bei der Untersuchung des nächsten Prüflings wird ein höherer (z.B. um 50 % erhöhter) Umschaltdruck Pᵤ gewählt. Ergibt der sich anschließende Druckvergleich zwischen Pᵤ und Pᵤ max wieder, daß Pᵤ noch weit unter Pᵤ max liegt, wird Pᵤ bei der Untersuchung eines dritten Prüflings weiter erhöht. Erst dann, wenn der nach dem Umschalten beobachtete Druckwert etwa 20 % bis 70 % des Druckwertes von Pᵤ mₐₓ beträgt, wird der Druck Pu nicht mehr weiter erhöht. Dieser Druckwert Pᵤ ist dann der gewünschte optimale Druckwert Pu opt für die Umschaltung von Evakuierbetrieb auf Meßbetrieb.

Voraussetzung dieses Lernverfahrens ist, daß die nacheinander zu untersuchenden Prüflinge möglichst identisch sind. Im allgemeinen sinkt der Druck bei dichten Prüflingen aufgrund des höheren Saugvermögens der TMP nach der Umschaltung sehr schnell unter den maximal zulässigen Druck im Massenspektrometer, so daß eine sehr frühe Umschaltung möglich ist. Bei der Festlegung der Druckschwellen ist jedoch zu berücksichtigen, daß der Einlaßdruck nicht nur vom Gas aus dem Prüfling, sondern ggf. auch von einem Grobleck stammen kann. Im letzteren Fall fällt der Druck nach der Umschaltung nur noch auf einen endliche Druckwert, der sich aus dem Verhältnis Q_{GROB- LECK} (Leckrate des Groblecks) zu S_{TMP} (Saugvermögen der Turbomolekularpumpe) ergibt und nicht oberhalb des maximal zulässigen Druckes im Massenspektrometer liegen darf.

Die Erfindung ermöglicht die Anpassung des Lecksuchverfahrens an die Eigenschaften der Prüflinge, ohne diese vorher durch aufwendige Untersuchungen feststellen zu müssen.

## Patentansprüche

1. Verfahren zur Untersuchung einer Mehrzahl ähnlicher Prüflinge auf Lecks mit Hilfe einer Testgas-Lecksucheinrichtung
- mit einem Anschluß (Testanschluß 3) für Prüflinge (2)
- mit einer Vorvakuumpumpe (13), deren Einlaß über eine erste Leitung (12) mit einem ersten Ventil (15) mit dem Testanschluß (3) in Verbindung steht,
- mit einer zweistufigen Hochvakuumpumpe (6), deren Einlaß mit einem Massenspektrometer (5), deren Zwischeneinlaß (9) über eine zweite Leitung (14) mit einem zweiten Ventil (16) mit dem Testanschluß (3) und deren Auslaß über eine dritte Leitung (17) mit einem dritten Ventil (18) mit dem Einlaß der Vorvakuumpumpe (13) verbunden ist,
bei welchem die Prüflinge (2) zunächst bei geschlossenem zweiten und dritten Ventil (16 bzw. 18) und offenem ersten Ventil (18) mit Hilfe der Vorvakuumpumpe evakuiert werden (Evakuierbetrieb), und zwar auf einen Druck Pᵤ, der so gewählt ist, daß nach
dem Umschalten auf Meßbetrieb der maximal zulässige Druck P_{u max} im Massenspektrometer (5) nicht überschritten wird, und danach durch Öffnen des zweiten Ventils (16) von Evakuierbetrieb auf Meßbetrieb umgeschaltet wird, **dadurch gekennzeichnet, daß** zur Feststellung des optimalen Umschaltdruckes P_{u opt} ein Lernverfahren angewendet wird, indem bei der Untersuchung der ersten Prüflinge (2) der Umschaltdruck Pᵤ stufenweise bis zu einem optimalen Umschaltdruck P_{u opt} erhöht wird, und dass bei der Untersuchung der weiteren Prüflinge (2) auf Lecks die Öffnung des Ventils (16) bei dem festgestellten Umschaltdruck P_{u opt} erfolgt.

2. Verfahren nach Anspruch 1, **dadurch gekennzeichnet, daß** die Umschaltung von Evakuierbetrieb auf Meßbetrieb bei einem ersten Prüfling bei einem Druck Pᵤ erfolgt, der erheblich unter dem maximal zulässigen Druck P_{u max} liegt, daß bei der Untersuchung eines weiteren Prüflings die Umschaltung von Evakuierbetrieb auf Meßbetrieb bei einem höheren Druck Pᵤ vorgenommen wird und daß nach dem Umschalten das Verhalten des Druckes mit Hilfe eines Druckmeßgerätes (22) beobachtet wird; ergibt sich bei diesem Druckvergleich, daß Pᵤ noch weit unter P_{u max} liegt, wird Pᵤ bei der Untersuchung weiterer Prüflinge jeweils weiter erhöht, und zwar so lange, bis der nach dem Umschalten beobachtete Druckwert (P_{u opt}) etwa 20 % bis 70 % des Druckwertes von P_{u max} beträgt.

## Claims

1. Process for inspecting a plurality of similar test objects for leaks by means of a test-gas leak detection device
- with a connection (test connection 3) for test objects (2),
- with a fore-vacuum pump (13), the inlet of which is connected to the test connection (3) via a first line (12) with a first valve (15),
- with a two-stage high-vacuum pump (6), the inlet of which is connected to a mass spectrometer (5), the intermediate inlet (9) of said high-vacuum pump being connected to the test connection (3) via a second line (14) with a second valve (16) and its outlet being connected to the inlet of the fore-vacuum pump (13) via a third line (17) with a third valve (18),
in which the test objects (2) are evacuated (evacuation mode) by means of the fore-vacuum pump with an initially closed second and third valve (16 and 18 respectively) and an open first valve (15), specifically down to a pressure Pᵤ which is so selected that, following switchover to the measurement mode, the maximum admissible pressure P_{u max} in the mass spectrometer (5) is not exceeded, and thereafter a switchover from the evacuation mode to the measurement mode is effected by opening of the second valve (16), **characterized in that**, for the purpose of determining the optimum switchover pressure P_{u opt}, a learning process is applied in which, during the inspection of the first test objects (2), the switchover pressure Pᵤ is increased in steps up to an optimum switchover pressure P_{u opt} and, during the inspection of the further test objects (2) for leaks, opening of the valve (16) is effected at the determined switchover pressure P_{u opt}.

2. Process according to claim 1, **characterized in that** the switchover from the evacuation mode to the measurement mode is effected for a first test object at a pressure Pᵤ which is significantly lower than the maximum admissible pressure P_{u max}, during the inspection of a further test object, the switchover from the evacuation mode to the measurement mode is effected at a higher pressure Pᵤ and, following the switchover, the course of the pressure is observed by means of a pressure gauge (22); if it is determined through this comparison of pressures that Pᵤ is still far below P_{u max}, Pᵤ is further increased in each case during the inspection of further test objects for so long until the pressure value (P_{u opt}) observed following the switchover amounts to approximately 20 % to 70 % of the pressure value of P_{u max} .

## Revendications

1. Procédé de détection de fuites sur une pluralité d'échantillons similaires à l'aide d'un dispositif de détection de fuites à gaz témoin comprenant
- un raccord (raccord d'essai 3) pour les échantillons (2),
- une pompe à vide préliminaire (13) dont l'admission est en communication avec le raccord d'essai (3) par l'intermédiaire d'une première conduite (12) avec une première soupape (15),
- une pompe à vide poussé à deux étages (6), dont l'admission est reliée à un spectromètre de masse (5), dont l'admission intermédiaire (9) est reliée au raccord d'essai (3) par l'intermédiaire d'une deuxième conduite (14) avec une deuxième soupape (16), et dont la sortie est reliée à l'admission de la pompe à vide préliminaire (13) par l'intermédiaire d'une troisième conduite (17) avec une troisième soupape (18),
dans lequel les échantillons (2) sont d'abord évacués (fonctionnement d'évacuation) à l'aide de la pompe à vide préliminaire, la deuxième et la troisième soupapes (16 et 18) étant fermées et la première soupape (18) étant ouverte, et ceci jusqu'à une pression Pᵤ qui est choisie de manière à ce qu'après la commutation sur le fonctionnement de mesure la pression maximale admissible P_{u max} dans le spectromètre de masse (5) ne soit pas dépassée, puis on commute du fonctionnement d'évacuation sur le fonctionnement de mesure en ouvrant la deuxième soupape (16), **caractérisé en ce que** pour déterminer la pression de commutation optimale P_{u opt} on utilise un procédé d'apprentissage, en augmentant par étages la pression de commutation Pᵤ lors de l'examen des premiers échantillons (2), jusqu'à une pression de commutation optimale P_{u opt}, et **en ce que** lors de l'examen des autres échantillons (2) pour détecter des fuites, l'ouverture de la soupape (16) s'effectue à la pression de commutation P_{u opt} déterminée.

2. Procédé selon la revendication 1, **caractérisé en ce que** la commutation depuis le fonctionnement d'évacuation sur le fonctionnement de mesure s'effectue pour un premier échantillon à une pression Pᵤ se situant nettement en dessous de la pression maximale admissible P_{u max}, **en ce que** lors de l'examen d'un autre échantillon la commutation depuis le fonctionnement d'évacuation sur le fonctionnement de mesure s'effectue à une pression Pᵤ plus élevée, et **en ce qu'**après la commutation le comportement de la pression est observé à l'aide d'un appareil de mesure de pression (22) ; si de cette comparaison de pressions il résulte que Pu est encore nettement inférieure à P_{u max}, Pᵤ est à chaque fois augmentée lors de l'examen d'autres échantillons, et ceci jusqu'à ce que la valeur de pression (P_{u opt}) observée après la commutation représente 20 % à 70 % environ de la valeur de pression de P_{u max}.
